# EUROPEAN PATENT APPLICATION

(11) **EP 4 629 400 A1**
(43) Date of publication of application: **08.10.2025**
(21) Application number: 24763561.8
(22) Date of filing: 08.02.2024
(51) Int. Cl.: H01M 10/52, H01M 10/06, H01M 50/114, H01M 50/15, H01M 50/645

(54) **LEAD STORAGE BATTERY**

(30) Priority: 28.02.2023 JP 2023029547
(71) Applicant: GS Yuasa International Ltd., Kyoto-shi, Kyoto 601-8520 (JP)
(72) Inventor: SEKIYA, Kazuki, Kyoto-shi, Kyoto 6018520 (JP); YAMASHITA, Hiroto, Kyoto-shi, Kyoto 6018520 (JP)
(74) Representative: Isarpatent
(86) International application number: PCT/JP2024/004295
(87) International publication number: WO 2024/181077

(57) **Abstract**

A lead-acid battery 1 includes: a container 20; a plurality of plates 30A and 30B housed in the container 20; a separator 30C that is housed in the container 20 and partitions the plates; an electrolyte solution 35 housed in the container 20; a catalyst device 100 that accelerates a reaction of generating water from gas G generated by a charge-discharge reaction; and a lid member 50 that seals the container 20. The catalyst device 100 is attached to the lid member 50 or to a plug 70 put on the lid member 50, and a reaction position 120A with respect to the gas G in the catalyst device 100 is located above a liquid level 35S of the electrolyte solution 35 and is always away from the liquid level 35.

## Description

### TECHNICAL FIELD

The present invention relates to a technique for suppressing performance degradation of a catalyst device in a lead-acid battery.

### BACKGROUND ART

Since in a lead-acid battery, an electrolyte solution (water) is electrolyzed by a charge reaction and oxygen gas and hydrogen gas are generated, and thus the lead-acid battery has a structure in which a vent hole is provided in an upper portion of a liquid plug or in a lid to exhaust the oxygen gas and the hydrogen gas. As a measure against the decrease in the electrolyte solution caused by electrolysis, there is a method of providing a lead-acid battery with a catalyst part that accelerates a recombination reaction between oxygen gas and hydrogen gas (reaction of returning to water).

In relation to the above technique, there is a description of "A catalyst part for a lead-acid battery, including a catalyst layer including a catalyst to accelerate a reaction for generating water or water vapor from oxygen and hydrogen, and a structure through which at least part of the water or water vapor generated by a catalyst reaction is condensed and flowed back to an inside of the lead-acid battery, wherein the catalyst part is gas permeable as a whole." in paragraph 18 of the following Patent Document 1. In addition, there is a description of "More preferably, the baffle may lean toward the inside of the lead-acid battery. The inclined baffle facilitates sliding down of liquid drops to the inside of the lead-acid battery to further reduce the decrease in electrolyte solution." in paragraph 46.

In addition, there is a description of "A case according to an aspect of the present invention is a case for housing a catalyst material in a lead-acid battery, wherein the catalyst material contains a catalyst that accelerates a reaction for generating water or water vapor from oxygen and hydrogen, the container has an opening covered with a membrane, and the membrane communicates the oxygen, the hydrogen, and the water vapor between the catalyst material and the outside of the case, and is oriented at an angle of 0° or more and 80° or less with respect to a direction of gravity." in paragraph 16 of the following Patent Document 2.

### PRIOR ART DOCUMENT

### PATENT DOCUMENTS

Patent Document 1: Japanese Patent No. 6576297
Patent Document 2: Japanese Utility Model Registration No. 3229214

### SUMMARY OF THE INVENTION

### PROBLEMS TO BE SOLVED BY THE INVENTION

There is a description of "In this comparative example, it was suggested that water was condensed on the surface of the membrane, the condensed water did not slide down because the membrane was horizontal, a layer of liquid (water) was formed on the surface of the membrane, the catalytic reaction was not promoted, and the catalyst was finally deteriorated." in paragraph 38 of Patent Document 2 (Japanese Utility Model Registration No. 3229214).

In a lead-acid battery, since oxygen gas and hydrogen gas are generated by a charge reaction, the liquid level rises due to volume expansion of an electrolyte solution, and the distance to a catalyst device decreases. As the distance decreases and the electrolyte solution adheres to the catalyst device, a liquid membrane is formed on the surface of the catalyst device. The liquid membrane formed on the surface of the catalyst device may degrade the performance of the catalyst device, as described above.

An object of the present invention is to suppress performance degradation of a catalyst device caused by a liquid membrane.

### MEANS FOR SOLVING THE PROBLEMS

A lead-acid battery includes: a container; a plurality of plates housed in the container; a separator that is housed in the container and partitions the plates; an electrolyte solution housed in the container; a catalyst device that accelerates a reaction of generating water from gas generated by a charge-discharge reaction; and a lid member that seals the container. The catalyst device is attached to the lid member or to a plug put on the lid member, and a reaction position with respect to the gas in the catalyst device is located above a liquid level of the electrolyte solution and is always away from the liquid level.

A lead-acid battery includes: a container; a plurality of plates housed in the container; a separator that is housed in the container and partitions the plates; an electrolyte solution housed in the container; a catalyst device that accelerates a reaction of generating water from gas generated by a charge-discharge reaction; and a lid member that seals the container. The catalyst device is attached to the lid member or to a plug put on the lid member, and a reaction position with respect to the gas in the catalyst device is located above the highest liquid level position of the electrolyte solution and is away from the highest liquid level position by a predetermined distance or more.

### ADVANTAGES OF THE INVENTION

The present technique can suppress a reaction position with respect to gas in a catalyst device from being covered with a liquid membrane. Therefore, it is possible to suppress performance degradation of the catalyst device.

### BRIEF DESCRIPTION OF THE DRAWINGS

Fig. 1 is a perspective view of a lead-acid battery.
Fig. 2 is a perspective view of a container.
Fig. 3 is a cross-sectional view of the lead-acid battery (cross-sectional view taken along line A-A in Fig. 1).
Fig. 4 is a perspective view of a partially cut catalyst device.
Fig. 5 is a perspective view of the partially cut catalyst device.
Fig. 6 is a view illustrating a positional relationship between the catalyst device and a liquid level of an electrolyte solution.
Fig. 7 is a table indicating a relationship between an environmental temperature and a liquid level rise distance.
Fig. 8 is a view illustrating an arrangement of plates.
Fig. 9 is a diagram illustrating a relationship between an inter-plate pitch and a separator, and a liquid level rise distance.
Fig. 10 is a cross-sectional view of a lead-acid battery (cross-sectional view taken along line A-A in Fig. 1).

### MODE FOR CARRYING OUT THE INVENTION

### (Outline of Present Embodiment)

(1) A lead-acid battery according to an embodiment of the present invention includes: a container; a plurality of plates housed in the container; a separator that is housed in the container and partitions the plates; an electrolyte solution housed in the container; a catalyst device that accelerates a reaction of generating water from gas generated by a charge-discharge reaction; and a lid member that seals the container. The catalyst device is attached to the lid member or to a plug put on the lid member, and a reaction position with respect to the gas in the catalyst device is located above a liquid level of the electrolyte solution and is always away from the liquid level.
(2) A lead-acid battery according to an embodiment of the present invention includes: a container; a plurality of plates housed in the container; a separator that is housed in the container and partitions the plates; an electrolyte solution housed in the container; a catalyst device that accelerates a reaction of generating water from gas generated by a charge-discharge reaction; and a lid member that seals the container. The catalyst device is attached to the lid member or to a plug put on the lid member, and a reaction position with respect to the gas in the catalyst device is located above the highest liquid level position of the electrolyte solution and is away from the highest liquid level position by a predetermined distance or more.
   The lead-acid battery according to (1) or (2) can suppress the reaction position with respect to the gas in the catalyst device from being covered with a liquid membrane. Therefore, it is possible to suppress performance degradation of the catalyst device caused by the liquid membrane.
(3) In the lead-acid battery according to (2), the container or the lid member may be provided with a maximum liquid level display portion that indicates the highest liquid level position of the electrolyte solution. In the configuration in (3), the reaction position with respect to the gas in the catalyst device is preferably set to be higher than the highest liquid level position displayed by the maximum liquid level display portion, and away from the highest liquid level position displayed by the maximum liquid level display portion by a predetermined distance or more. As a result, it is possible to suppress the reaction position with respect to the gas in the catalyst device from being covered with the liquid membrane. Therefore, it is possible to suppress performance degradation of the catalyst device caused by the liquid membrane.
(4) In the lead-acid battery according to (2) or (3), the predetermined distance may be longer than the maximum rising distance of a liquid level caused by charging. According to the configuration in (4), since the liquid level does not reach the reaction position of the gas in the catalyst device even when the liquid level of the electrolyte solution maximally rises during charging, it is possible to suppress performance degradation of the catalyst device.
(5) In the lead-acid battery according to (2) or (3), the predetermined distance may be longer as an environmental temperature of the lead-acid battery is higher. According to the configuration in (5), since the liquid level that has risen does not reach the reaction position of the gas in the catalyst device even in a high-temperature environment, it is possible to suppress performance degradation of the catalyst device. In addition, in other environments, since the predetermined distance can be shortened, the degree of freedom in selecting the size and shape of the catalyst device is high. Furthermore, the degree of freedom in selecting battery specifications is high.
(6) In the lead-acid battery according to (2) or (3), the predetermined distance may be longer as the distance between the plates is narrower. According to the configuration in (6), since the liquid level that has risen does not reach the reaction position of the gas in the catalyst device even in the lead-acid battery having a specification in which the distance between the plates is narrow, it is possible to suppress performance degradation of the catalyst device. In addition, in lead-acid batteries with other specifications, since the predetermined distance can be shortened, the degree of freedom in selecting the size and shape of the catalyst device is high.

### <First Embodiment>

A first embodiment will be described with reference to the drawings.

### 1. Structure of lead-acid battery 1

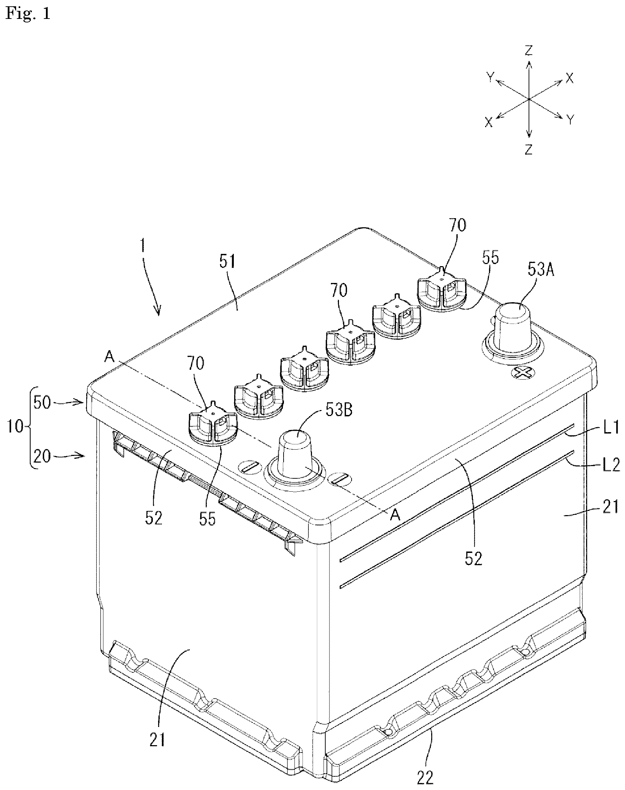

A lead-acid battery 1 is used as a power source for a moving body such as a four-wheeled vehicle or a two-wheeled vehicle. As illustrated in Figs. 1 to 3, the lead-acid battery 1 includes a battery case 10, an element 30 which is a power generating element, an electrolyte solution 35, a liquid plug 70, and a catalyst device 100. Note that, in the following description, a lateral width direction (arrangement direction of external terminals 53A and 53B) of the battery case 10 when the battery case 10 is placed horizontally without being inclined with respect to an installation surface is defined as an X direction, a height direction of the battery case 10 is defined as a Z direction, and a depth direction of the battery case 10 is defined as a Y direction.

The battery case 10 includes a container 20 and a lid member 50. The container 20 is made of synthetic resin. The container 20 includes four outer walls 21 and a bottom wall 22, and has a box shape with an open upper surface.

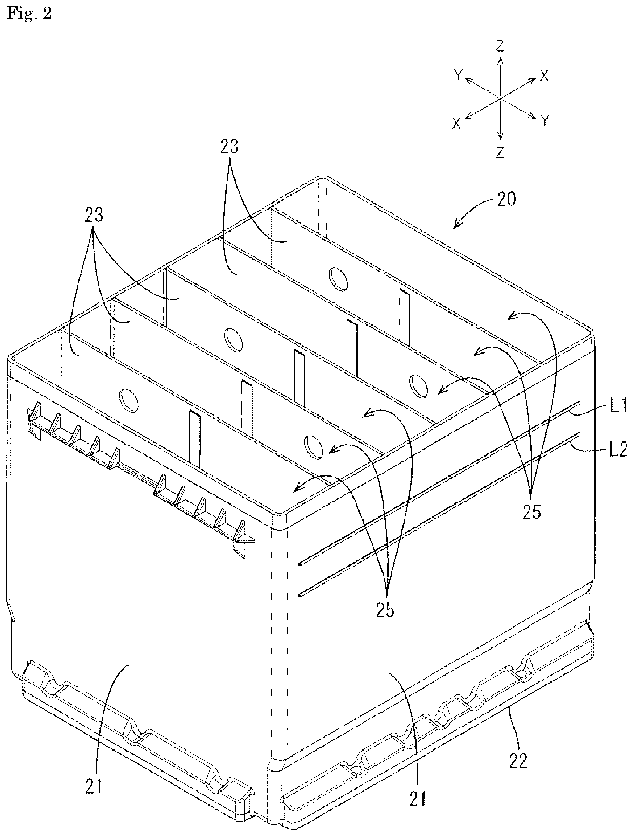

As illustrated in Fig. 2, the inside of the container 20 is partitioned into a plurality of cell chambers 25 by partitions 23. Six cell chambers 25 are provided in the lateral width direction of the container 20 (X direction in Fig. 2), and each cell chamber 25 houses the element 30 together with the electrolyte solution 35 made of dilute sulfuric acid.

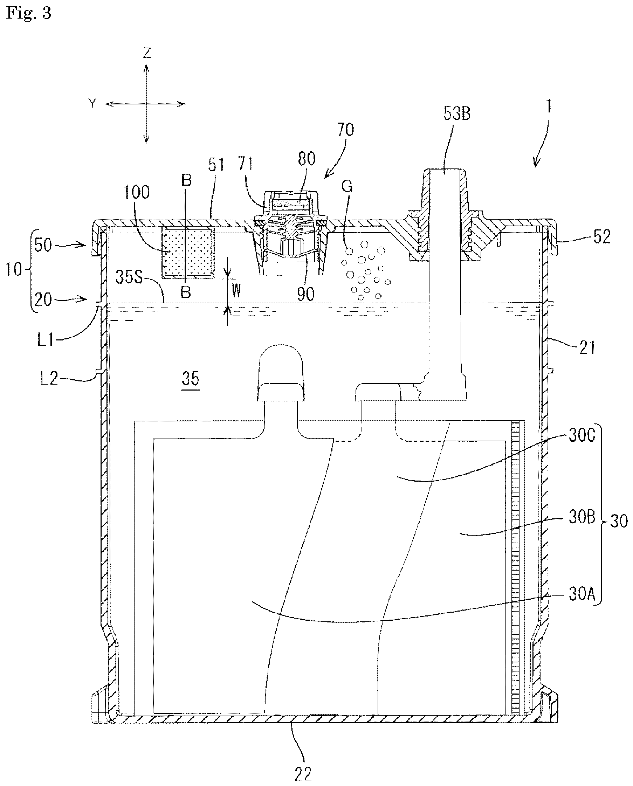

As illustrated in Fig. 3, the element 30 includes a positive electrode plate 30A, a negative electrode plate 30B, and a separator 30C which partitions both of the plates 30A and 30B. Each of the plates 30A and 30B is formed by filling a grid with an active material.

The lid member 50 is made of synthetic resin, and includes a flat plate portion 51 and an outer peripheral wall 52. The flat plate portion 51 has a size capable of sealing the upper surface of the container 20. The outer peripheral wall 52 extends downward from an outer peripheral edge of the flat plate portion 51.

On a back surface of the lid member 50, a lid partition (not illustrated) is formed corresponding to the partition 23. The lid member 50 is attached so as to overlap the container 20, and is thermally welded to the container 20. The lid member 50 seals the upper surface of the container 20.

The lead-acid battery 1 is provided with a positive electrode external terminal 53A and a negative electrode external terminal 53B. As illustrated in Fig. 1, the positive electrode external terminal 53A and the negative electrode external terminal 53B are arranged on a respective one of both sides of the lid member 50 in the X direction.

The liquid plug 70 is attached to a liquid port 55 of the lid member 50. Six sets of the liquid ports 55 and the liquid plugs 70 are provided corresponding to the six cell chambers 25. By removing the liquid plug 70, it is possible to supply an additional solution from the liquid port 55 to each cell chamber 25 of the container 20.

The liquid plug 70 includes a plug main body 71, a filter 80, and a splash-proof body 90. The liquid plug 70 includes a vent hole (not illustrated in Fig. 2) in an upper wall of the plug main body 71, and can exhaust gas generated in each cell chamber 25 to the outside from the vent hole.

The filter 80 is an explosion-proof filter, and suppresses intrusion of sparks or the like generated outside into the container 20.

The splash-proof body 90 suppresses the electrolyte solution 35 from escaping through the vent hole by forming a vent path of gas G inside the plug main body in a labyrinth shape.

### 2. Structure of catalyst device

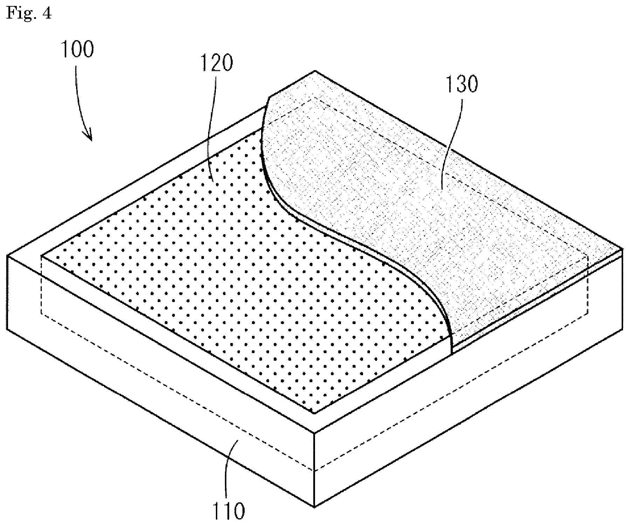

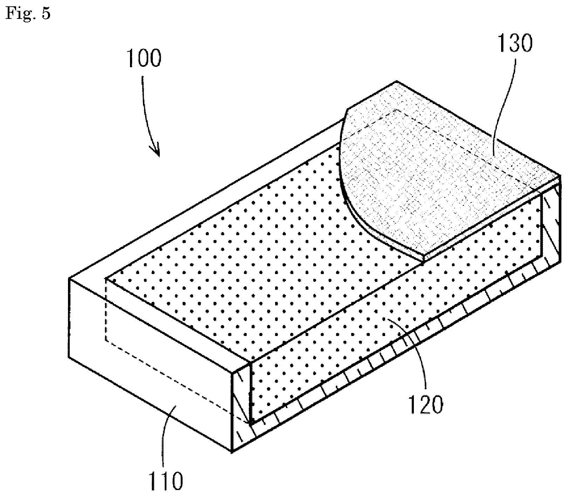

As illustrated in Figs. 4 and 5, the catalyst device 100 includes a case 110, a catalyst layer 120, and a permeable membrane 130. The case 110 is made of resin and has a bottomed box shape.

The catalyst layer 120 is located inside the case 110. The catalyst layer 120 accelerates a recombination reaction (reaction of returning to water) between oxygen gas and hydrogen gas.

The permeable membrane 130 is located on the surface of the case 110 and covers the catalyst layer 120. The permeable membrane 130 is porous and permeates oxygen gas, hydrogen gas, and water vapor. As the permeable membrane 130, a material that does not react with the electrolyte solution inside the battery is preferable, and porous PTFE can be used as an example.

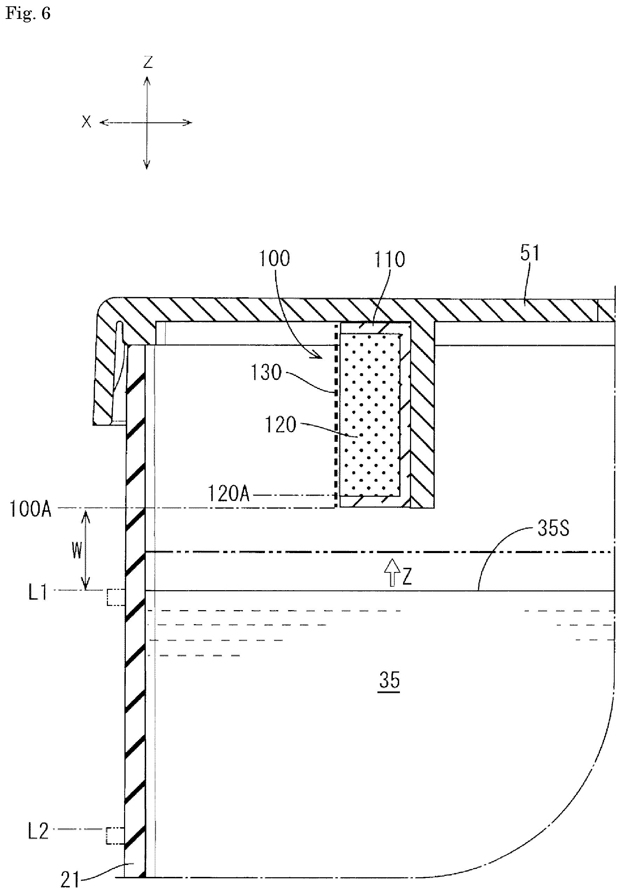

As illustrated in Fig. 3, the catalyst device 100 is attached to a lower surface of the lid member 50. Specifically, six catalyst devices 100 are attached corresponding to the six cell chambers 25. Each catalyst device 100 is attached vertically to the lid member 50 such that the surface of the catalyst device 100 (the surface of the permeable membrane 130) is 90 degrees with respect to the horizontal direction (see Fig. 6). In the lead-acid battery 1 mounted on a four-wheeled vehicle such as a passenger car or a light vehicle, the catalyst device 100 is arranged at a position lower than the total height of the lead-acid battery defined in IEC60095-2:2021 (IEC60095-4:2021 for a large battery). Accordingly, although the lead-acid battery mounted on the four-wheeled vehicle is required to be exchangeable and thus its compatibility in outer shape is desired, the lead-acid battery 1 in the present embodiment can maintain compatibility with a lead-acid battery to which the catalyst device 100 is not attached. In addition, in a lead-acid battery for a two-wheeled vehicle, the installation position of the catalyst device 100 is at a position lower than the total height of the lead-acid battery defined by the IEC standard of the two-wheeled vehicle for the compatibility described above.

By installing the catalyst device 100 in the cell chamber 25, a part of the gas generated in the cell chamber 25 can be recombined and returned to water, and a decrease in the electrolyte solution 35 can be suppressed.

### 3. Indicator

As illustrated in Fig. 1, a first liquid level line L1 and a second liquid level line L2 are provided on the surface of the outer wall 21 of the container 20. The two liquid level lines L1 and L2 are indicators for controlling the liquid amount of the electrolyte solution 35. The first liquid level line L1 indicates the highest liquid level position of the electrolyte solution 35. The first liquid level line L1 is an example of a "maximum liquid level display portion" of the present invention. The second liquid level line L2 is located below the first liquid level line L1 and indicates the lowest liquid level position of the electrolyte solution 35. The container 20 is light transmissive, for example, transparent or translucent, and the liquid level height (position in the vertical direction) of the electrolyte solution 35 can be confirmed by comparing the liquid level position of the electrolyte solution 35 with the first liquid level lines L1 and L2 from the outside of the container.

When the electrolyte solution 35 decreases to the height of the second liquid level line L2, a liquid level 35S is returned to the height of the first liquid level line L1 by adding electrolyte solution, so that the liquid amount of the electrolyte solution 35 can be controlled in the range of L1 to L2.

### 4. Positional relationship between catalyst device and liquid level

In the lead-acid battery 1, since oxygen gas and hydrogen gas are generated by a charge reaction, the liquid level 35S rises due to volume expansion of the electrolyte solution 35, and the distance from the liquid level 35S to the catalyst device 100 decreases. When the liquid level 35S of the electrolyte solution 35 approaches the catalyst device 100, the electrolyte solution 35 adheres to the catalyst device 100, and a liquid membrane is formed on the surface of the permeable membrane 130.

Since the liquid membrane formed on the surface of the permeable membrane 130 inhibits the movement of the gas G, the gas G hardly reaches the catalyst layer 120 through the permeable membrane 130, and there is a concern that the performance of the catalyst device 100 is degraded.

As illustrated in Fig. 6, the catalyst device 100 is located above the first liquid level line L1 indicating the highest liquid level. Specifically, a lower end position 100A of the catalyst device 100 is higher than the first liquid level line L1 indicating the highest liquid level by a predetermined distance W or more in the vertical direction (Z direction: height direction of the container 20).

The predetermined distance W is a value larger than a maximum rising distance Z of the liquid level 35S caused by the charge reaction during normal use. The maximum rising distance Z is a difference (the maximum value of the difference) between the liquid level before charging and the liquid level after charging, and experimental data and empirical values can be used.

Due to the relationship of W>Z, regardless of the liquid level rise of the electrolyte solution 35, the catalyst device 100 can always be away from the liquid level 35S of the electrolyte solution 35, and the liquid level 35S of the electrolyte solution 35 can be prevented from reaching the catalyst device 100.

Note that, in order to suppress a degradation of catalyst performance caused by the liquid membrane, it is sufficient as long as the electrolyte solution 35 does not reach the height of the catalyst layer 120. Therefore, it is sufficient as long as at least a distance in the vertical direction (Z direction) from the first liquid level line L1 indicating the highest liquid level to a lower end 120A of the catalyst layer 120 is equal to or more than the predetermined distance W. The lower end 120A of the catalyst layer 120 corresponds to a "reaction position with respect to gas" in the present invention.

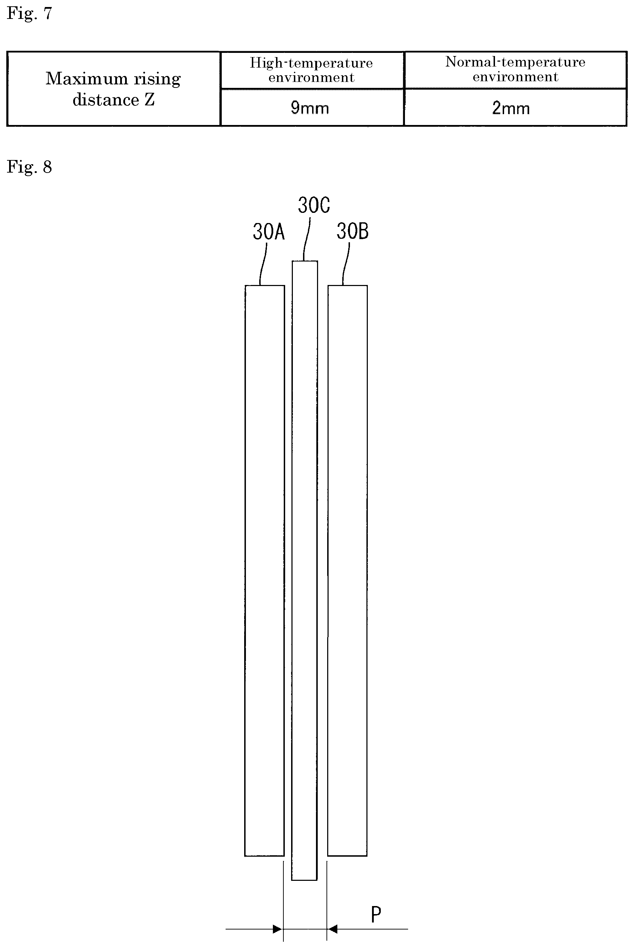

Fig. 7 is a table (experimental data) indicating the relationship between the maximum rising distance Z of the liquid level 35S and the environmental temperature of the lead-acid battery 1. The maximum rising distance Z of the liquid level 35S caused by charging depends on the temperature of the lead-acid battery 1. Since the temperature of the battery becomes higher in a high-temperature environment than in a normal-temperature environment, the rising amount of the liquid level 35S is larger in the high-temperature environment.

Therefore, the predetermined distance W may be equal to or longer than the maximum rising distance Z of the liquid level 35S in the high-temperature environment such that the catalyst device 100 is always away from the liquid level 35S of the electrolyte solution 35 regardless of the environmental temperature.

In addition, the lead-acid battery 1 may be a dedicated product corresponding to the environmental temperature, and the predetermined distance W may be set for each environmental temperature. In this case, as compared with the lead-acid battery 1 used in the high-temperature environment, the lead-acid battery 1 used in the normal-temperature environment has an advantage that the size and shape of the catalyst device 100 can be arbitrarily selected because the predetermined distance W is short.

Note that usage in an engine room or the like of a vehicle, for example, can be an example of the high-temperature environment. In addition, usage in a place other than the engine room (for example, usage in a situation where the lead-acid battery 1 is installed outside the vehicle such as periphery of tires in a large vehicle such as a truck) can be an example of the normal-temperature environment.

### 5. Description of effects

Conventionally, since the lead-acid battery for the moving body such as a four-wheeled vehicle or a two-wheeled vehicle has been mounted in a place where inspection is easy and electrolyte solution addition can be performed even if liquid loss occurs, it has not been necessary to provide a catalyst device, and since the frequency of electrolyte solution addition itself is not so high, there has been no demand from a user for suppressing liquid loss as compared with the current battery. In recent years, there is a warming tendency, the temperature is high, and the period during which the temperature is high is also long, and the inventors have considered that liquid loss is a problem to be solved in the future, and have conceived to provide a catalyst device. According to the lead-acid battery 1 described in the present embodiment, it is possible to suppress the surface of the catalyst device 100 from being covered with the liquid membrane when the liquid level of the electrolyte solution 35 rises. Therefore, it is possible to suppress performance degradation of the catalyst device 100 caused by the liquid membrane. In addition, conventionally, there has been an industrial lead-acid battery on which a catalyst vent is mounted. Such a lead-acid battery has an expected life of 10 years or more, but since the catalyst vent cannot be used for such a long period of time, it is necessary to replace the catalyst vent, and this has not led to an idea of arranging a catalyst device in the lead-acid battery. Furthermore, the industrial catalyst vent is too large to be arranged in a battery, and from this point as well, it has not led to an idea of arranging the catalyst device in the lead-acid battery. According to the lead-acid battery 1 described in the present embodiment, even if the catalyst device 100 is attached to the lower surface of the lid member 50 and provided inside the case of the lead-acid battery 1, it is possible to suppress performance degradation of the catalyst device 100 caused by the liquid membrane.

Even if the surface of the catalyst device 100 is temporarily covered with the liquid membrane for some reason, the lead-acid battery 1 described in the present embodiment is less likely to be covered as compared with a case where the position of the catalyst device 100 in the vertical direction is set without considering the relationship with the first liquid level line (the highest liquid level of the electrolyte solution) L1. Therefore, in the lead-acid battery 1 described in the present embodiment, as compared with the case where the position of the catalyst device 100 in the vertical direction is set without considering the relationship with the first liquid level line (maximum liquid level of the electrolyte solution) L1, a possibility that the surface of the catalyst device is covered with the liquid membrane and the performance of the catalyst device is limited during use of the lead-acid battery is low, and it is possible to suppress performance degradation of the catalyst device 100 caused by the liquid membrane from a viewpoint of the total use period and a statistical viewpoint.

### <Second Embodiment>

In a lead-acid battery 1, an inter-plate pitch (distance P illustrated in Fig. 8) of an element 30 varies depending on the application. For example, since an idling stop vehicle has a larger number of engine starts than a normal vehicle, a battery mounted on the idling stop vehicle has a large number of stacked plates 30A and 30B and a narrow inter-plate pitch P.

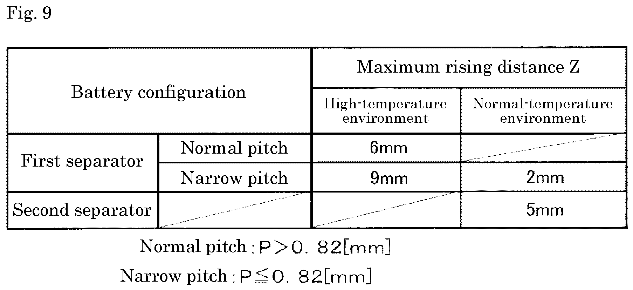

The maximum rising distance Z of a liquid level 35S caused by a charge reaction varies depending on the inter-plate pitch P in addition to the environmental temperature. Specifically, as the inter-plate pitch P is narrower, gas G generated between the plates hardly escapes, and the maximum rising distance Z of the liquid level 35S tends to be a large value as indicated in Fig. 9.

Therefore, a predetermined distance W may be equal to or longer than the maximum rising distance Z at the time of the narrow pitch such that a catalyst device 100 is always away from the liquid level 35S of an electrolyte solution 35 without depending on the inter-plate pitch P.

In addition, the lead-acid battery 1 may be a dedicated product corresponding to the inter-plate pitch P, and the predetermined distance W may be set for each inter-plate pitch P. In this case, as compared with the lead-acid battery 1 having the narrow pitch, the lead-acid battery 1 used in a normal pitch has an advantage that the size and shape of the catalyst device 100 can be arbitrarily selected because the predetermined distance W is short.

In Fig. 9, a first separator is a separator made of synthetic resin. A second separator is a separator made of synthetic fiber.

### <Other Embodiments>

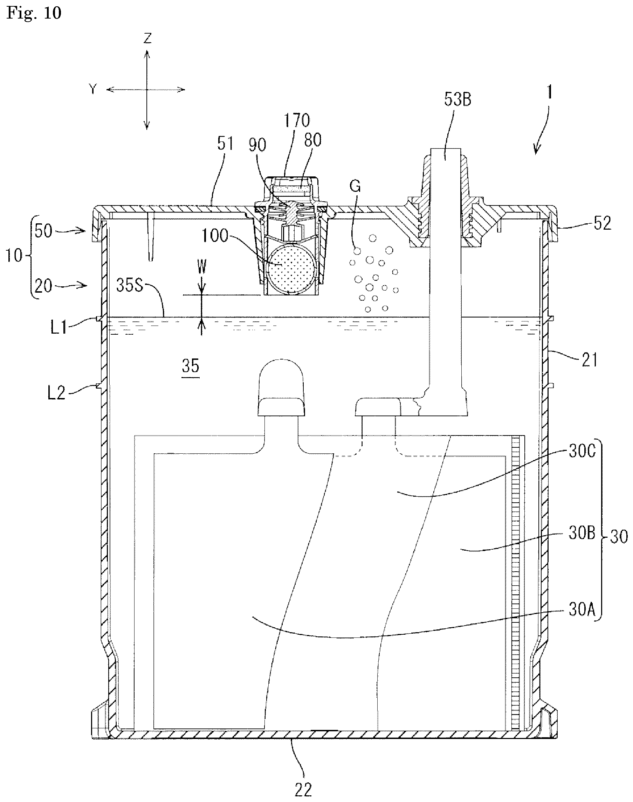

The present invention is not limited to the embodiments described with reference to the above description and drawings, and for example, the following embodiments are also included in the technical scope of the present invention.
(1) In the first embodiment, the lead-acid battery is used for a four-wheeled vehicle or a two-wheeled vehicle, but the application is not limited to the example in the embodiment. In addition, in a lead-acid battery, the arrangement of cell chambers 25 may be different from the aspect disclosed in the first embodiment, and for example, there is a matrix arrangement such as three rows in a depth direction × two columns in a lateral direction. A lead-acid battery having the matrix arrangement may be used in a large vehicle such as a bus. The present invention can also be applied to the lead-acid battery in which the cell chambers 25 are arranged in a matrix.
(2) In the first embodiment, as one aspect of the liquid plug 70, a configuration in which an upper portion of the plug protrudes from the upper surface of the lid member 50 (a configuration in which the upper portion of the plug is rotated with a finger to attach and detach the plug), has been described. The shape of a liquid plug 70 is not limited to the form illustrated in the first embodiment. For example, a configuration in which an upper portion of a plug does not protrude from an upper surface of a lid member 50 (a configuration in which a coin is inserted into a groove such as a cross formed on the upper portion of the plug to attach and detach the plug) may be used.
(3) In the first embodiment, an aspect in which the highest liquid level position (position in the vertical direction) of the electrolyte solution 35S is displayed by the first liquid level line L1 formed on the surface of the container 21, has been described. The highest liquid level position (position in the vertical direction) of an electrolyte solution 35S may be displayed by other methods. For example, the highest liquid level position may be displayed by a lower end of a sleeve (a member extending downward from an end of an electrolyte solution filling hole) formed around the electrolyte solution filling hole of a lid member. JP-A-2015-216085 discloses a technique for displaying or recognizing a position of the maximum liquid level using a sleeve. The first liquid level line L1 and the sleeve are an example of a "maximum liquid level display portion" of the present invention.
(4) In the first embodiment, the catalyst device 100 is attached to the lower surface of the lid member 50. The installation place of the catalyst device 100 is not limited to the lid member 50. In a battery case 10, a catalyst device 100 may be attached to another component as long as it is above a liquid level and in contact with gas G generated in a container 20. For example, as illustrated in Fig. 10, a catalyst device 100 may be attached to a liquid plug 170 at a position lower than a lower surface of a lid member 50. At this time, the catalyst device 100 is sized to pass through a liquid port 55 such that the liquid plug 170 can be attached to the lid member 50. The liquid plug 170 corresponds to a "plug" of the present invention. In addition, the catalyst device 100 may be attached to the liquid plug 170 at a position higher than the lower surface of the lid member 50.
(5) In the first embodiment, the configuration in which the gas G generated by the charge reaction in the container is discharged to the outside from the vent hole of the liquid plug 70, has been exemplified. The method of exhausting the gas G is not limited to the form using the liquid plug 70, and other methods may be used. For example, a lid member 50 may have a double structure of an upper lid and a middle lid, and gas may be exhausted using a vent path formed inside the double lid. JP-A-2015-135804 and JP-A-2020-17462 disclose a lead-acid battery having a double-lid structure. In a case of a lead-acid battery having a double-lid structure, a sealing plug (including no vent hole) may be used instead of a liquid plug for sealing a liquid port. In addition, a catalyst device 100 can be attached to a lower surface of the inner lid or can be attached to the sealing plug. The sealing plug corresponds to a "plug" of the present invention.
(6) In addition, in a lead-acid battery in which the highest liquid level position is not displayed, the liquid level of a new battery can be regarded as the maximum liquid level. In a case of such a lead-acid battery, a lower end position 100A (reaction position with respect to gas) of a catalyst device 100 is preferably above the liquid level (maximum liquid level) of the new battery and away from the liquid level of the new battery by a predetermined distance or more. In this way, it is possible to suppress the lower end position 100A (reaction position with respect to gas) of the catalyst device 100 from being covered with a liquid membrane. Therefore, it is possible to suppress performance degradation of the catalyst device 100 caused by the liquid membrane.

### DESCRIPTION OF REFERENCE SIGNS

1: Lead-acid battery
10: Battery case
20: Container
50: Lid member
70: Liquid plug (plug)
100: Catalyst device
110: Case
120: Catalyst layer
130: Permeable membrane

## Claims

1. A lead-acid battery comprising:
a container;
a plurality of plates housed in the container;
a separator that is housed in the container and partitions the plates;
an electrolyte solution housed in the container;
a catalyst device that accelerates a reaction of generating water from gas generated by a charge-discharge reaction; and
a lid member that seals the container, wherein
the catalyst device is attached to the lid member or to a plug put on the lid member, and a reaction position with respect to the gas in the catalyst device is located above a liquid level of the electrolyte solution and is always away from the liquid level.

2. A lead-acid battery comprising:
a container;
a plurality of plates housed in the container;
a separator that is housed in the container and partitions the plates;
an electrolyte solution housed in the container;
a catalyst device that accelerates a reaction of generating water from gas generated by a charge-discharge reaction; and
a lid member that seals the container, wherein
the catalyst device is attached to the lid member or to a plug put on the lid member, and a reaction position with respect to the gas in the catalyst device is located above a highest liquid level position of the electrolyte solution and is away from the highest liquid level position by a predetermined distance or more.

3. The lead-acid battery according to claim 2, wherein the container or the lid member is provided with a maximum liquid level display portion that indicates the highest liquid level position of the electrolyte solution.

4. The lead-acid battery according to claim 2 or 3, wherein the predetermined distance is longer than a maximum rising distance of a liquid level caused by charging.
